(19)

Europäisches Patentamt
European Patent Office
Office européen des brevets

(11) **EP 4 708 611 A1**

(12) **EUROPEAN PATENT APPLICATION**
published in accordance with Art. 153(4) EPC

(43) Date of publication:
**11.03.2026  Bulletin 2026/11**

(21) Application number: **23925319.8**

(22) Date of filing: **02.03.2023**

(51) International Patent Classification (IPC):
*H02J 7/00* (2026.01)     *H01M 10/48* (2006.01)

(52) Cooperative Patent Classification (CPC):
**H01M 10/48; H02J 7/00**

(86) International application number:
**PCT/JP2023/007824**

(87) International publication number:
**WO 2024/180764 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **RENAULT S.A.S.
92100 Boulogne-Billancourt (FR)**

(72) Inventor: **AOKI, Tetsuya
Atsugi-shi, Kanagawa 243-0123 (JP)**

(74) Representative: **Renault Group
1, avenue du Golf
FR TCR AVA 4 4C
78084 Guyancourt Cedex (FR)**

(54) **SHORT CIRCUIT SIGN DETECTION SYSTEM AND SHORT CIRCUIT SIGN DETECTION METHOD**

(57)     A short circuit precursor detection system (1) includes a battery cell (21), a temperature sensor (13) that measures a battery temperature, a resistance measurement unit (101) that measures electrolyte resistance of a solid-state electrolyte of the battery cell (21), and a determination unit (104) that determines presence or absence of a precursor of occurrence of short circuit between a positive electrode and a negative electrode. The determination unit (104) determines that the precursor is present when an amount of decrease of the electrolyte resistance measured by the resistance measurement unit (101) during charging is larger than an amount of decrease of the electrolyte resistance caused by change in the battery temperature by a predetermined value or more.

Fig. 5

EP 4 708 611 A1

## Description

Technical Field

The present invention relates to a short circuit precursor detection system and a short circuit precursor detection method.

Background Art

There is a known method of detecting a lithium secondary battery state, including a discharging step of discharging the battery to an SOC of 10% or less, a measurement step of measuring impedance of the battery discharged by the discharging step, and a state detection step of detecting a state of the battery based on a measurement value of the impedance, obtained in the measurement step (for example, see Patent Document 1). In the state detection step of the method, based on the impedance measured in the measurement step, a reaction resistance value is calculated, and the calculated reaction resistance value is compared with a predetermined threshold value to determine whether or not the battery has been degraded by precipitation of lithium at the negative electrode.

Prior Art Document

Patent Document

Patent Document 1: JP A 2012-212513

Summary of Invention

Problems to be Solved by Invention

However, in the determination method as the above-described conventional art as disclosed in Patent Document 1, the reaction resistance value is compared with the threshold value to determine whether or not the precipitation of lithium at the negative electrode has degraded the battery. Accordingly, there may be a problem of difficulty in early detection of the short circuit caused by precipitation of lithium.

The present invention solves the problem by providing the short circuit precursor detection system and the short circuit precursor detection method for allowing early detection of occurrence of the short circuit.

Means for Solving Problems

The present invention solves the above-described problem by determining by the short circuit precursor determination means that a precursor of short circuit that occurs between a positive electrode and a negative electrode is present when an amount of decrease of electrolyte resistance measured by the resistance measurement means during charging is larger than an amount of decrease of the electrolyte resistance caused by change in the battery temperature by a predetermined value or more.

Effects of Invention

The present invention allows early detection of occurrence of short circuit.

Brief Description of Drawings

FIG. 1(a) is a graph representing values of current and voltage measured in an experimental example 1 for charging and discharging the battery under the condition which is unlikely to cause short circuit.
FIG. 1(b) is a graph representing values of current and voltage measured in an experimental example 2 for charging and discharging the battery under the condition which is likely to cause short circuit.
FIG. 2(a) represents a Cole-Cole plot showing impedance measured during discharging in the first cycle as indicated by II-a of FIG. 1(a).
FIG. 2(b) represents a Cole-Cole plot showing impedance measured during charging in the first cycle as indicated by II-b of FIG. 1(a).
FIG. 3(a) represents a Cole-Cole plot showing impedance measured during discharging in the first cycle as indicated by III-a of FIG. 2(b).
FIG. 3(b) represents a Cole-Cole plot showing impedance measured during charging in the first cycle as indicated by III-b of FIG. 2(b).
FIG. 3(c) represents a Cole-Cole plot showing impedance measured during discharging in the second cycle as indicated by III-c of FIG. 2(b).
FIG. 4 is a graph representing a Cole-Cole plot as shown in FIG. 3(b), taking a virtual part of the impedance as a vertical axis, and frequency as a horizontal axis.
FIG. 5 is a block diagram representing a short circuit precursor detection system of an embodiment according to the present invention.
FIG. 6 is a flowchart representing a short circuit precursor detection method of an embodiment according to the present invention.
FIG. 7 is a graph representing an example of a relationship between a battery temperature and a resistance coefficient.
FIG. 8(a) is a graph representing an example of a measurement value and a predicted value of the electrolyte resistance during charging.
FIG. 8(b) is a graph representing an example of change in the battery temperature during charging.

Mode(s) for Carrying out the Invention

[Interface resistance of solid-state electrolyte]

The inventor examined the method for detecting a precursor of short circuit caused by a dendrite precipitated on the interface between a solid-state electrolyte and a negative electrode during charging of an all-solid battery. From an experiment performed to calculate the resistance of the solid-state electrolyte (interface resistance of the solid-state electrolyte) during charging based on the high frequency impedance, the inventor found a declining tendency of the resistance before occurrence of the short circuit.

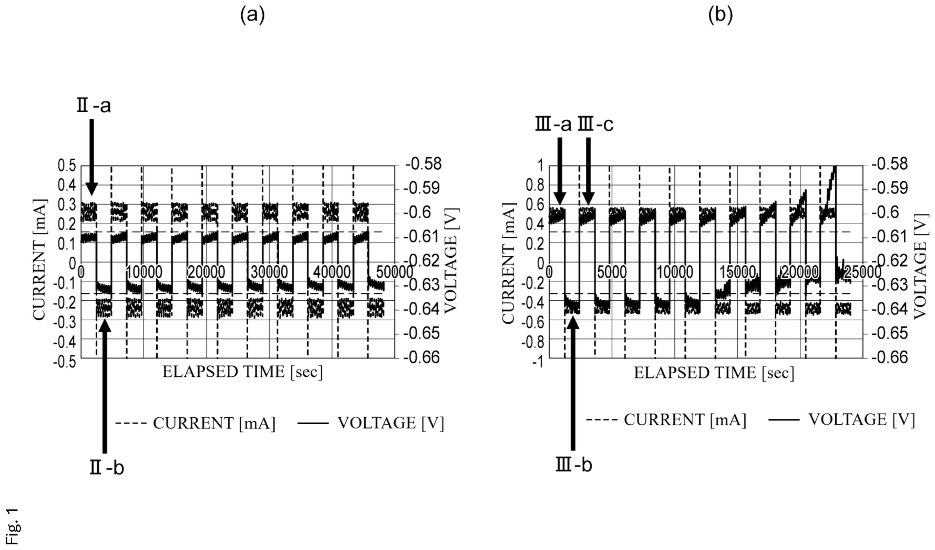

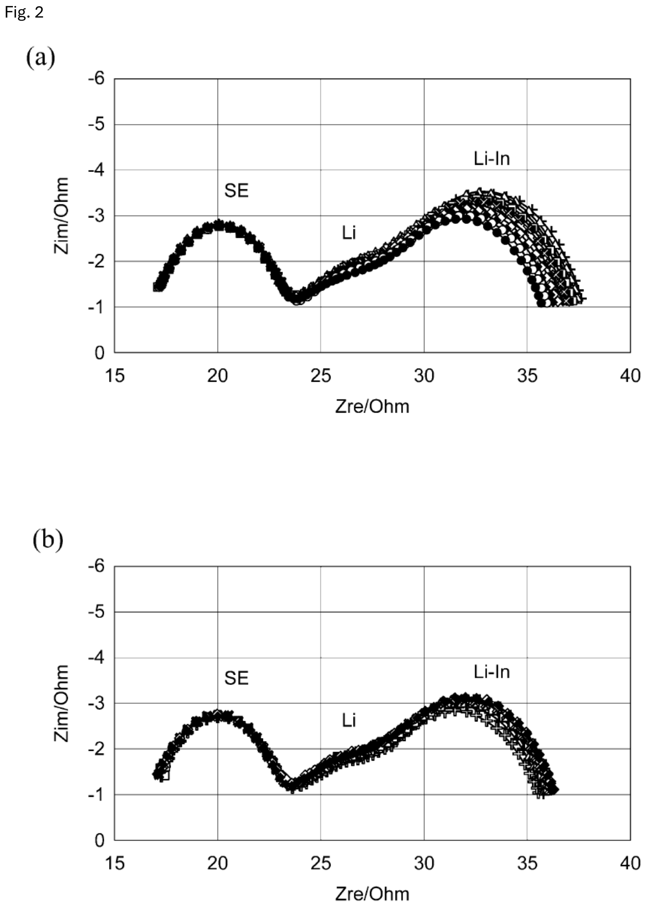

Fig. 1(a) is a graph representing values of current and voltage measured in an experimental example 1 for charging and discharging the battery under the condition which is unlikely to cause short circuit. FIG. 2(a) represents a Cole-Cole plot (Nyquist plot) showing impedance measured during discharging in the first cycle as indicated by II-a of FIG. 1(a). FIG. 2(b) represents a Cole-Cole plot showing impedance measured during charging in the first cycle as indicated by II-b of FIG. 1(a).

In the experimental example 1, an experimental battery 1 was prepared by providing a Li metal layer as the negative electrode on one surface of the solid-state electrolyte, and providing a Li-In layer as the positive electrode on the other surface. Then the experimental battery 1 was charged and discharged over a plurality of cycles while measuring the current, voltage, and impedance under the condition unlikely to cause short circuit between the negative electrode and the positive electrode (condition unlikely to cause precipitation of the dendrite on the contact interface between the negative electrode and the solid-state electrolyte during charging). Specifically, the experimental battery 1 was charged and discharged over a plurality of cycles by setting a current density value to 0.32 mA/cm$^2$. The impedance was measured a plurality of times during discharging and charging by an EIS measurement (electrochemical impedance measurement).

As illustrated in FIG. 1(a), in charging-discharging cycles of the experimental example 1, the voltage of the experimental battery 1 exhibited a normal value, and short circuit did not occur. At this time, the impedance during discharging in the first cycle as illustrated in FIG. 2(a) was hardly different from the impedance during charging in the first cycle as illustrated in FIG. 2(b).

The Cole-Cole plot has its vertical axis indicating the virtual part of the impedance, and its horizontal axis indicating the real part of the impedance. It is presumed that a diameter of a semi-circular part at the leftmost side of the drawing corresponds to a resistance value (hereinafter referred to as electrolyte resistance in some cases) of the solid-state electrolyte (SE: Solid-state Electrolyte), a diameter of a semi-circular part at the rightmost side corresponds to a reaction resistance value of the Li-In layer, and a diameter of a semi-circular part between those semi-circular parts corresponds to a reaction resistance value of the Li layer. Accordingly, for example, the semi-circle formed in the Cole-Cole plot allows calculation of the electrolyte resistance by fitting using an equivalent circuit.

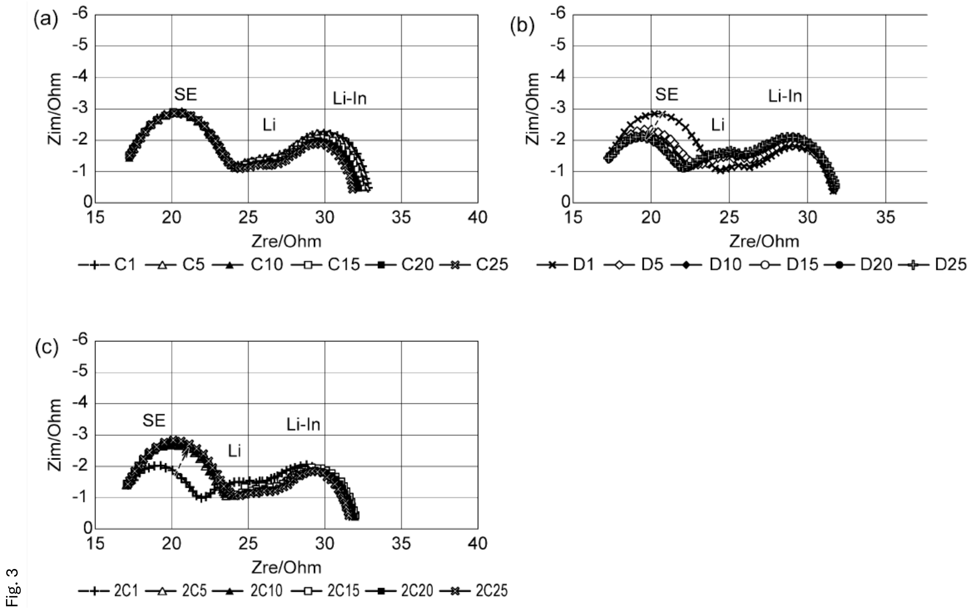

FIG. 1(b) is a graph representing values of current and voltage measured in an experimental example 2 for charging and discharging the battery under the condition which is likely to cause short circuit. FIG. 3(a) represents the Cole-Cole plot showing impedance measured during discharging in the first cycle as indicated by III-a of FIG. 2(b). FIG. 3(b) represents the Cole-Cole plot showing impedance measured during charging in the first cycle as indicated by III-b of FIG. 2(b). FIG. 3(c) represents the Cole-Cole plot showing impedance measured during discharging in the second cycle as indicated by III-c of FIG. 2(b).

As illustrated in FIG. 3(a), the impedance was measured during discharging in the first cycle in the order of C1, C5, C10, C15, C20, and C25. As illustrated in FIG. 3(b), the impedance was measured during charging in the first cycle in the order of D1, D5, D10, D15, D20, and D25. As illustrated in FIG. 3(c), the impedance was measured during discharging in the second cycle in the order of 2C1, 2C5, 2C10, 2C15, 2C20, and 2C25.

In the experimental example 2, like the experimental example 1, an experimental battery 2 was prepared by providing the Li metal layer as the negative electrode on one surface of the solid-state electrolyte, and the Li-In layer as the positive electrode on the other surface. Then the experimental battery 2 was charged and discharged over a plurality of cycles while measuring the current, voltage, and impedance under the condition likely to cause short circuit between the negative electrode and the positive electrode. Specifically, the experimental battery 2 was charged and discharged over a plurality of cycles by setting a current density value to 0.64 mA/cm$^2$.

As illustrated in FIG. 1(b), in the experimental example 2, the voltage of the experimental battery 2 started rising during charging in the sixth cycle, and thereafter, the voltage of the experimental battery 2 gradually approached 0[V] (short circuit) as the charging-discharging cycle proceeded. Comparison between the impedance during discharging in the first cycle as illustrated in FIG. 2(a) and the impedance during charging in the first cycle as illustrated in FIG. 2(b) revealed decrease in the electrolyte resistance during charging based on the impedance during charging. As illustrated in FIG. 2(c), the electrolyte resistance was restored to the original value during discharging in the second cycle. Although not specifically illustrated, during charging also in the second and subsequent cycles, the electrolyte resistance decreased similarly to the impedance as illustrated in FIG. 2(b).

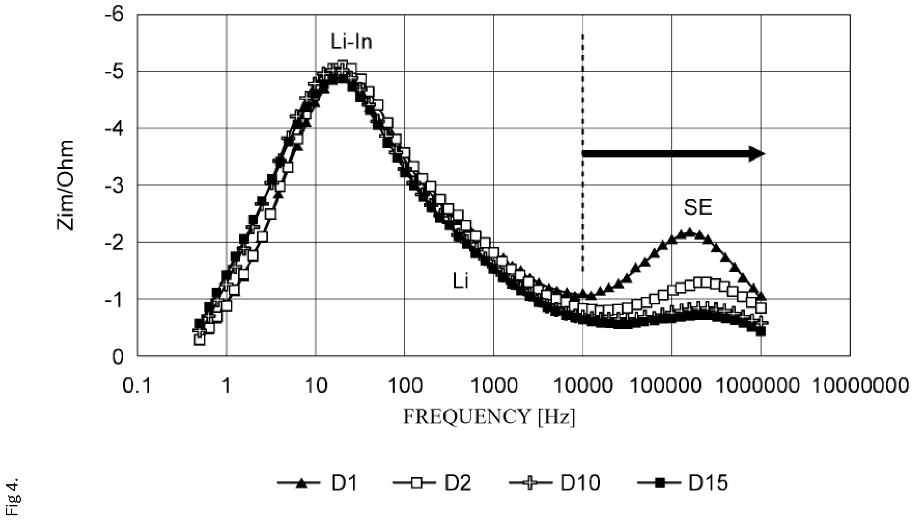

FIG. 4 is a graph representing a Cole-Cole plot as shown in FIG. 3(b), taking a virtual part of the impedance as the vertical axis, and frequency as the horizontal axis. As illustrated in FIG. 4, although not specifically limited, it is possible to calculate the electrolyte resistance based on the impedance of the experimental battery 2 with respect to an AC signal at frequency of 10 kHz or higher. In the experimental example 2, the electrolyte resistance calculated based on the impedance at 10 kHz or higher shows that the value of the virtual part is made smaller during charging with an elapsed time. In other words, the electrolyte resistance becomes smaller during charging with an elapsed time. Meanwhile, the resistance values of the Li metal layer and the Li-In layer, which are calculated based on the impedance lower than 10 kHz hardly change during charging.

The decrease in the electrolyte resistance during charging was detected in the charging cycle before detection of change in the battery voltage. The inventor found that the precursor of occurrence of short circuit was determinable by detecting decrease in the electrolyte resistance in the charging cycle.

[Influence of temperature change]

Furthermore, the inventor considered the possibility of concurrence of decrease in the electrolyte resistance, caused by the dendrite growth during charging, and decrease in the electrolyte resistance, caused by temperature rise of the battery during charging. As described later in detail, the short circuit precursor detection system and the short circuit precursor detection method according to the embodiment allowed the inventor to conceive of the evaluation of decrease in the electrolyte resistance, caused by the dendrite growth during charging by experimentally obtaining change characteristic of the electrolyte resistance to the temperature change, and making a comparison between a predicted value of the resistance change caused by the temperature change and an actual measurement value of the electrolyte resistance.

[Short circuit precursor detection system]

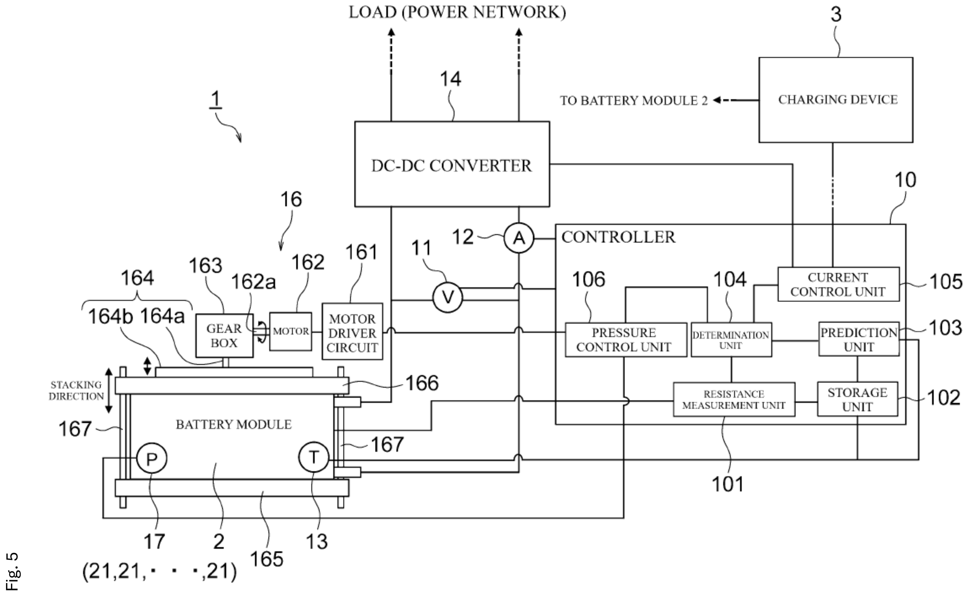

A short circuit precursor detection system according to the embodiment will be described with reference to the drawings. FIG. 5 is a block diagram representing a short circuit precursor detection system 1 of the embodiment. Although not specifically limited, the short circuit precursor detection system 1 of the embodiment is provided in a vehicle like an automobile. The vehicle is not specifically limited so long as the vehicle mounts a battery module. The automobile may be exemplified by, for example, an EV (Electric Vehicle), a PHV (Plug-in Hybrid Vehicle), an HV (Hybrid Vehicle), and the like.

The short circuit precursor detection system 1 controls the charging and discharging of a battery module 2. The battery module 2 includes a plurality of mutually stacked battery cells 21. The battery cell 21 formed as an all-solid battery includes at least a positive electrode, a solid-state electrolyte, and a negative electrode. The positive electrode may be at least formed of a positive electrode material that can desorb and absorb lithium (Li). Although not specifically limited, it is possible to use such material as NCM, NCA, and the like as the positive electrode material. For example, it is possible, but not limited, to use a sulfide solid electrolyte, or an oxide solid electrolyte as the solid-state electrolyte. It is sufficient that the negative electrode contains lithium, for example, a lithium metal.

As illustrated in FIG. 1, the short circuit precursor detection system 1 includes a controller 10, a voltage sensor 11, a current sensor 12, a temperature sensor 13, a DC-DC converter 14 connected to a load (power network), a pressure application mechanism 16, and a pressure sensor 17.

The controller 10 of the embodiment corresponds to an example of a "resistance measurement means" and a "short circuit precursor determination means" according to the present invention. The temperature sensor 13 of the embodiment corresponds to an example of a "temperature measurement means" according to the present invention. The pressure application mechanism 16 of the embodiment corresponds to an example of a "pressure application means" according to the present invention. The pressure sensor 17 of the embodiment corresponds to an example of a "pressure measurement means" according to the present invention.

The controller 10 is a battery control unit (BCU). The controller 10 is composed of a memory like a ROM or a RAM, and a processor such as a CPU. Based on a detected voltage detected by the voltage sensor 11, a detected current detected by the current sensor 12, a detected temperature detected by the temperature sensor 13, and the like, the controller 10 manages the state of the battery module 2, and determines an SOC usage range of the battery module 2 in accordance with the state of the battery module 2.

The controller 10 according to the embodiment can also determine whether or not the precursor of occurrence of short circuit is present in the battery cell 21 included in the battery module 2. The controller 10 includes a resistance measurement unit 101, a storage unit 102, a prediction unit 103, a determination unit 104, a current control unit 105, and a pressure control unit 106.

The resistance measurement unit 101 measures impedance of the battery cell 21 included in the battery module 2, and calculates the electrolyte resistance of the battery cell 21 from the measured impedance. The resistance measurement unit 101 can measure the impedance of the battery cell 21 by, for example, the EIS measurement and the like. For example, based on the impedance of the battery 21 to the AC signal at high frequency of 10 kHz or higher, the resistance measurement unit 101 can calculate the electrolyte resistance. More specifically, it is possible to use the diameter of an impedance circle at 10 kHz or higher in the above-described Cole-Cole plot as the electrolyte resistance. This makes it possible to calculate the electrolyte resistance without suffering the influence of the electrode reaction resistance or the like, which appears on the impedance in the low frequency band.

The resistance measurement unit 101 can output the calculated electrolyte resistance to the storage unit 102 and the determination unit 104.

In the embodiment, although not limited, the controller 10 includes the resistance measurement unit for measuring impedance. The short circuit precursor detection system 1 may be provided with an impedance measurement device besides the controller 10. Alternatively, a signal that contains a high frequency component is generated by a switching operation of the DC-DC converter 14 and may be input to the battery cell 21.

The storage unit 102 stores a temperature measurement value input from the temperature sensor 13 and the electrolyte resistance input from the resistance measurement unit 101. The storage unit 102 according to the embodiment stores a pre-charging battery temperature as the battery temperature measured by the temperature sensor 13 before charging the battery module 2, and a pre-charging electrolyte resistance as the electrolyte resistance measured by the resistance measurement unit 101 before charging the battery module 2. The storage unit 102 outputs the pre-charging battery temperature and the pre-charging electrolyte resistance to the prediction unit 103.

The prediction unit 103 calculates a predicted value of the electrolyte resistance in accordance with the battery temperature during charging based on the pre-charging battery temperature and the pre-charging electrolyte resistance. The predicted value is calculated based on an experimentally obtained change characteristic of the electrolyte resistance to the temperature change. A more detailed method for calculating the predicted value will be described later.

The determination unit 104 determines presence or absence of the precursor of occurrence of short circuit between the positive electrode and the negative electrode of the battery cell 21. When the amount of decrease of the electrolyte resistance measured by the resistance measurement unit 101 during charging becomes larger than the amount of decrease of the electrolyte resistance caused by the battery temperature change by a predetermined value or more, the determination unit 104 determines that the precursor is present.

For example, the determination unit 104 compares the predicted value calculated by the prediction unit 103 with the measurement value of the electrolyte resistance measured by the resistance measurement unit 101 during charging. When the comparison result indicates that the measurement value is smaller than the predicted value by a predetermined value or more, it is possible to be determined that the precursor of short circuit is present.

The current control unit 105 controls a discharging current from the battery module 2 to the load (power network), and a charging current from a charging device 3 to the battery module 2. When, for example, the determination unit 104 determines that the precursor of occurrence of short circuit is present, the current control unit 105 according to the embodiment is capable of avoiding an increase in the charging current from the charging device 3, decreasing the charging current, or discharging the battery.

The pressure control unit 106 controls the pressure applied to the battery module 2 by controlling the pressure application mechanism 16. Although not specifically limited, the pressure to be applied to the battery module 2 is set to a performance-required pressure or higher during charging and discharging of the battery module 2. The performance-required pressure is a pressure set such that the electric resistance of the battery cell 21 has the same value as a predetermined threshold value. The threshold value is a maximum value of the electric resistance in its range that allows output and input of the charging-discharging power necessary for the battery cell 21 to operate the vehicle control system and the like.

The pressure control unit 106 according to the embodiment can control the pressure application mechanism 16 to decrease the pressure to be applied to the battery when the determination unit 104 determines that the precursor of occurrence of short circuit is present.

The voltage sensor 11 is a sensor for detecting a voltage across terminals of the battery module 2. The voltage sensor 11 is connected between wirings to which the positive electrode and the negative electrode of the battery module 2 are connected. The current sensor 12 is a sensor for detecting a current input to/output from the battery module 2. The current sensor 12 is connected to the wirings to which the positive electrode or the negative electrode of the battery module 2 is connected. Measurement values of the voltage sensor 11 and the current sensor 12 are output to the current control unit 105 of the controller 10.

The temperature sensor 13 is provided in the battery module 2. The temperature sensor 13 is a sensor for detecting the temperature of the battery module 2. Although not specifically limited, the temperature of the battery module 2 can be regarded as the temperature of the battery cell 21. The measurement value of the temperature sensor 13 is output to the storage unit 102 and the prediction unit 103.

The DC-DC converter 14 is a power converter that converts the voltage input from the battery module 2 into a predetermined voltage, and outputs power to the load such as a motor and the like. The DC-DC converter 14 is also a power converter that converts the voltage input from the load such as the motor or a charging device into a predetermined voltage, and outputs power to the battery module 2. The DC-DC converter 14 is controlled by the controller 10. The battery module 2 is connected to an input side of the DC-DC converter 14, and the load is connected to an output side of the DC-DC converter 14. The load is a power network and the like including a motor inverter and the like. That is, the battery module 2 is connected to the load via the DC-DC converter 14.

The pressure application mechanism 16 applies pressure to the battery module 2 by pressing the battery module 2 along the stacking direction of the battery cells 21 in the battery module 2. The pressure application mechanism 16 of the embodiment includes a motor driver circuit 161, a motor 162, a gear box 163, a pressure transmitting body 164, a fixed end plate 165, a movable end plate 166, and a plurality of shafts 167.

The motor driver circuit 161 operates the motor 162. The motor driver circuit 161 controls driving operations of the motor 162 based on a control signal from the controller 10.

The motor 162 includes a first drive shaft 162a. The motor 162 rotatively drives the first drive shaft 162a in accordance with an output from the motor driver circuit 161.

The gear box 163 is connected to the first drive shaft 162a, and converts the rotary drive of the first drive shaft 162a into the drive motion of the pressure transmitting body 164 toward the above-described stacking direction.

The pressure transmitting body 164 is moved in the up-down direction by the driving power transmitted via the gear box 163. The pressure transmitting body 164 includes a second drive shaft 164a and a pressure transmitting plate 164b. The second drive shaft 164a is connected to the gear box 163 to receive the rotary drive motion of the first drive shaft 162a of the motor 162, transmitted by the gear box 163. The pressure transmitting plate 164b is a plate that moves along the stacking direction in association with the rotation of the second drive shaft 164a. In the embodiment, as the pressure transmitting plate 164b moves downward in the drawing, the pressure applied to the battery module 2 can be controlled toward the pressure increasing direction. As the pressure transmitting plate 164b moves upward in the drawing, the pressure applied to the battery module 2 can be controlled toward the pressure decreasing direction.

The fixed end plate 165 and the movable end plate 166 constitute a pair of plate members, and are connected to each other by the plurality of shafts 167. The fixed end plate 165 is fixed to the shafts 167 to support the battery module 2. Meanwhile, the movable end plate 166 is not fixed to the shafts 167, but is movable along an extending direction of the shaft 167. The movable end plate 166 applies pressure to the battery module 2 from above in accordance with the force transmitted from the pressure transmitting body 164. The movable end plate 166 is movable along the stacking direction in accordance with expansion and contraction of the battery module 2 in association with charging and discharging, and in accordance with expansion and contraction of the battery module 2 in association with change in the pressure applied by the movable end plate 166 to the battery module 2.

The pressure sensor 17 is a sensor that can measure the pressure applied to the battery module 2.

The pressure sensor 17 can output the detected pressure to the pressure control unit 106 of the controller 10.

The battery module 2 is electrically connected to the charging device 3. The charging device 3 connected to the battery cells 21 may be a device configured to charge the battery module 2 mounted on, for example, an electric automobile and a hybrid automobile. The on-board battery module 2 may be charged by taking out a charging cable of the charging device 3, fitting a charging gun at a leading end of the charging cable with a connector of a charging port of the vehicle, and then operating a charging start switch. The controller 10 can control each of the DC-DC converter 14 and the charging device 3 such that the charging state of the battery module 2 is brought into a target charging state while managing the charging state (SOC) of the battery cell 21 included in the battery module 2. The charging device 3 of on-vehicle type is also available. Specifically, the charging device 3 may be configured to allow an HV engine to generate electricity to charge the battery module 2.

As described above, the battery module 2 is electrically connected to the load such as the motor. The load is a device activated by power of the battery module 2, for example, a motor serving as a drive source of the vehicle, and an auxiliary unit such as an air conditioner and a light. The battery module 2 is discharged under the control of the controller 10 in response to a system request or an external power request. The system request corresponds to an instruction from an onboard computer, such as an ECU, issued during traveling of the vehicle. Regarding the external power requests, for example, in the case of setting a timer to activate the air conditioner before the traveling of the vehicle in response to an instruction from the device outside the vehicle such as a mobile terminal to make the temperature of the vehicle interior appropriate at the start of vehicle traveling, the instruction from the device outside the vehicle corresponds to the external power request.

The battery module 2 mounted on the electric automobile and the hybrid automobile may be applied to Vehicle Grid Integration (VGI). The VGI is a technique for power system connection of the electric automobile or the hybrid automobile that mounts the battery module 2 such that power accumulated in the battery module 2 is supplied to the system (load) via the power network.

[Short circuit precursor detection method]

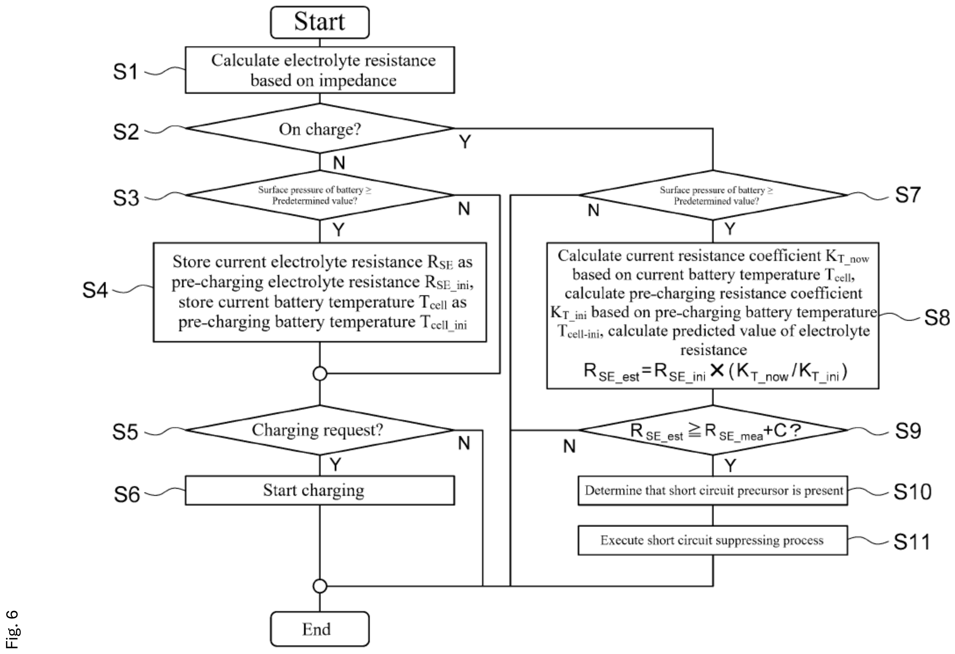

A short circuit precursor detection method with respect to the battery module 2 using the above-described short circuit precursor detection system 1 will be described below. FIG. 6 is a flowchart representing the short circuit precursor detection method according to the embodiment. The short circuit precursor detection method as illustrated in FIG. 6 is repeatedly executed for each predetermined period.

First, in Step S1 of the short circuit precursor detection method, the resistance measurement unit 101 of the controller 10 measures impedance of the battery cell 21. Based on the measured impedance, a current electrolyte resistance $R_{SE\_mea}$ of the battery cell 21 is calculated.

Next, in Step S2, the current control unit 105 of the controller 10 determines whether or not the battery module 2 is on charge.

When the battery module 2 is not on charge, it is determined whether or not a measurement value of the pressure (surface pressure), measured by the pressure sensor 17, applied to the battery 21 is a predetermined value or more in Step S3. This determination may be made by the pressure control unit 106 of the controller 10.

Although not specifically limited, the predetermined value of the pressure may be the performance-required pressure as described above. The resistance of the battery cell 21 varies in accordance with the surface pressure applied to the battery cell 21. Especially when the surface pressure is lower than the performance-required pressure, the resistance of the battery cell 21 tends to be sharply increased as the surface pressure becomes low. That is, when the pressure applied to the battery is lower than the predetermined pressure, the pressure sensitivity of the electrolyte resistance becomes high. Accordingly, the short circuit detection accuracy can be improved by avoiding the use of the electrolyte resistance in the above-described case.

Meanwhile, when the surface pressure is the performance-required pressure or higher, the change in the resistance in accordance with the surface pressure becomes negligibly small. In the embodiment, the storage unit 102 stores the electrolyte resistance $R_{SE}$ in the state where the surface pressure applied to the battery cell 21 is the predetermined value or more in Step S4 as described later. This makes it possible to improve accuracy of the short circuit precursor detection.

When the measurement value of the pressure (surface pressure) applied to the battery 21 is the predetermined value or more, in Step S4, the storage unit 102 stores (storage) the current electrolyte resistance $R_{SE\_mea}$ calculated in Step S1 as the pre-charging electrolyte resistance $R_{SE\_ini}$, and stores (storage) the current temperature $T_{CELL}$ of the battery cell 21 measured by the temperature sensor 13 as the pre-charging temperature $T_{CELL\_ini}$.

Then in Step S5, the current control unit 105 of the controller 10 determines whether or not the request to charge the battery module 2 is present. In Step S3, when the measurement value of the pressure (surface pressure) is smaller than a predetermined value, the process executes Step S5 by skipping over Step S4.

When the request to charge the battery module 2 is present, charging of the battery module 2 is started in Step S6, and the short circuit precursor detection ends. When there is no request to charge the battery module 2, the short circuit precursor detection ends without further processing.

In Step S2, when it is determined that the battery module 2 is on charge, it is determined in Step S7 whether or not the measurement value of the pressure applied to the battery 21, measured by the pressure sensor 17, is a predetermined value or more. Although not specifically limited, the predetermined value of the pressure may be the performance-required pressure similarly to Step S3.

The battery module 2 is determined to be on charge when, in the short circuit precursor detection as illustrated by the flowchart in FIG. 6, charging is started in Step S6 subsequent to execution of Steps S1 to S5, and thereafter, the short circuit precursor detection is executed again.

When it is determined that the measurement value of pressure is the predetermined value or more in Step S7, the prediction unit 103 calculates a predicted value $R_{SE\_est}$ of the electrolyte resistance $R_{SE}$ in accordance with the current (on charge) battery temperature $T_{CELL}$ in Step S8.

As each of the battery cells 21 generates heat during charging, the battery temperature $T_{CELL}$ measured during charging in Step S1 is higher than the pre-charging temperature $T_{CELL\_ini}$ of the battery cell 21 before charging. The predicted value $R_{SE\_est}$ can be calculated utilizing the characteristic that the electrolyte resistance $R_{SE}$ decreases as the temperature $T_{CELL}$ of the battery cell 21 becomes higher. In the embodiment, the predicted value $R_{SE\_est}$ can be calculated using a resistance coefficient $K_T$. The resistance coefficient $K_T$ represents a change rate of the electrolyte resistance $R_{SE}$ in accordance with the temperature $T_{CELL}$ of the battery cell 21. Although not specifically limited, the resistance coefficient $K_T$ can be preliminarily set by experimentally confirming the change in the electrolyte resistance, caused by the battery temperature.

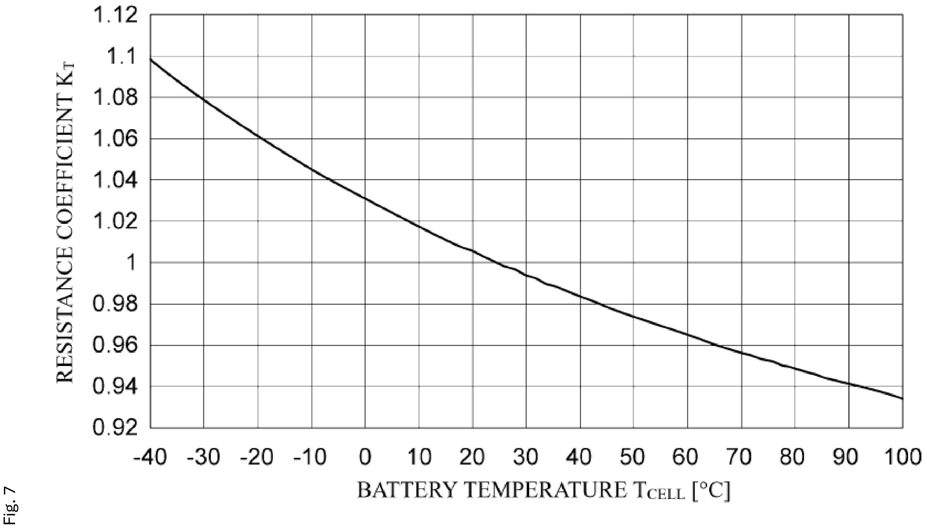

FIG. 7 is a graph representing an example of a relationship between the battery temperature $T_{CELL}$ and the resistance coefficient $K_T$. As illustrated by the graph in FIG. 7, the vertical axis indicates the resistance coefficient $K_T$, and the horizontal axis indicates the temperature of the battery cell 21. The graph illustrated in FIG. 7 is obtained by plotting ($K_T = R_{SE}/R_{SE\_25}$) each change rate (resistance coefficient $K_T$) of values of the electrolyte resistance $R_{SE}$ at the respective temperatures $T_{CELL}$ to the electrolyte resistance $R_{SE\_25}$ using the electrolyte resistance $R_{SE\_25}$ at the battery temperature $T_{CELL}$ of 25°C as a reference value. When the relationship between the battery temperature $T_{CELL}$ and the resistance coefficient $K_T$ becomes different for each of the battery cells 21, it is preferable to set the resistance coefficient $K_T$ for each of the battery cells 21.

The predicted value $R_{SE\_est}$ can be calculated using the resistance coefficient $K_T$ as described below. That is, a resistance coefficient $K_{T\_now}$ corresponding to the current temperature $T_{CELL\_now}$ of the battery cell 21 is calculated, and the pre-charging resistance coefficient $K_{T\_ini}$ is calculated based on the pre-charging battery temperature $T_{cell\_ini}$ stored in the storage unit 102. The predicted value $R_{SE\_est}$ is calculated based on the following formula (1):

$$R_{SE\_est} = R_{SE\_ini} \times (K_{T\_now}/K_{T\_ini}) \ (1).$$

When it is determined in Step S7 that the pressure measurement value is smaller than the predetermined value, the short circuit precursor detection ends.

After execution of Step S8, in Step S9 the determination unit 104 determines whether or not the amount of decrease $D_{\_mea}$ of the electrolyte resistance $R_{SE}$ measured by the resistance measurement unit 101 during charging is larger than the amount of decrease $D_{\_est}$ of the electrolyte resistance $R_{SE}$ caused by the battery temperature change by a predetermined value C or more. Specifically, in the embodiment, when the following formula (2) is satisfied, it is determined that the amount of decrease $D_{\_mea}$ is larger than the amount of decrease $D_{\_est}$ by the predetermined value C or more:

$$R_{SE\_est} \geq R_{SE\_mea} + C \ \ (2).$$

The predetermined value C in the above-described formula (2) is a margin for avoiding erroneous determination. This margin is a numerical value set to avoid erroneous determination concerning presence or absence of the short circuit precursor, which is caused by the measurement noise of impedance, and variation among the battery cells 21. This margin can be experimentally determined by charging and discharging the battery under the condition which may cause short circuit. That is, the investigation may be preliminarily conducted experimentally with respect to the specific value of $|R_{SE\_est} - R_{SE\_mea}|$ that is large enough to indicate high possibility of short circuit precursor. For example, the predetermined value C can be set to be in the range from 3% to 50% of the $R_{SE\_mea}$, preferably, from 5% to 20% of the $R_{SE\_mea}$, and more preferably, from 5% to 15% of the $R_{SE\_mea}$.

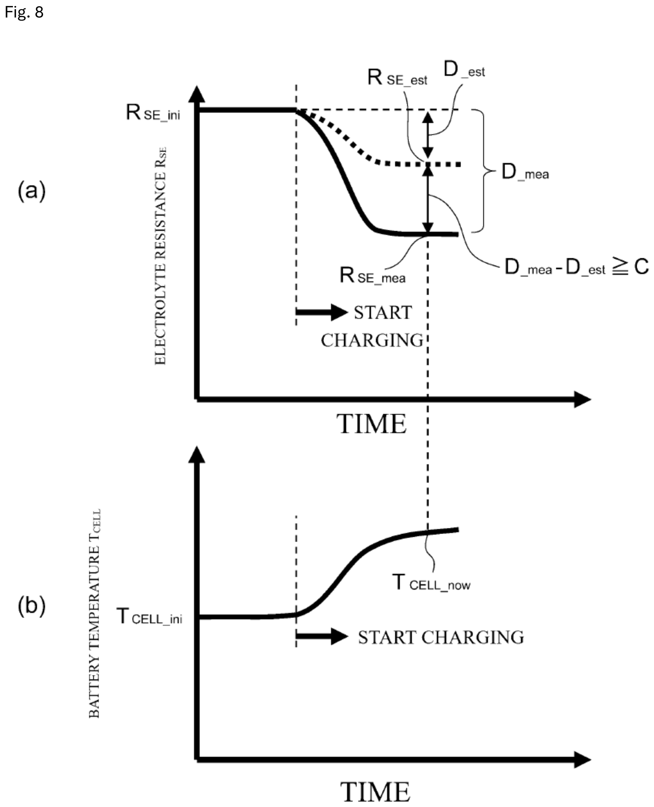

FIG. 8(a) is a graph representing an example of the measurement value $R_{SE\_mea}$ and the predicted value $R_{SE\_est}$ of the electrolyte resistance during charging. FIG. 8(b) is a graph representing an example of change in the battery temperature $T_{CELL}$ during charging. FIG. 8 illustrates an example that short circuit occurs between the positive electrode and the negative electrode of the battery cell 21.

As illustrated in FIG. 8(b), when starting the charging of the battery cell 21, the temperature $T_{CELL}$ of the battery cell 21 rises with the passage of time. As illustrated in FIG. 8(a), the measurement value $R_{SE\_mea}$ of the electrolyte resistance actually measured after the start of charging becomes significantly lower than the predicted value $R_{SE\_est}$ of the electrolyte resistance caused by the temperature rise. In this exemplary case, the amount of decrease $D_{\_mea}$ of the electrolyte resistance $R_{SE\_mea}$ actually measured at the battery temperature $T_{CELL\_now}$ from the pre-charging electrolyte resistance $R_{SE\_ini}$ becomes larger than the amount of decrease $D_{\_est}$ of the predicted value $R_{SE\_est}$ at the battery temperature $T_{CELL\_now}$ from the pre-charging electrolyte resistance $R_{SE\_ini}$ by the predetermined value C or more ($D_{\_mea} - D_{\_est} \geq C$).

The battery cell 21 gets degraded as the increase in the number of times of charging and discharging. The electrolyte resistance $R_{SE}$ also increases in association with the degradation. On the basis of the state of the battery cell 21 before charging, the predicted value $R_{SE\_est}$ estimated from the pre-charging electrolyte resistance $R_{SE\_ini}$ is used to make a comparison between the electrolyte resistance before charging and the electrolyte resistance during charging in the same charging-discharging cycle as indicated by the above-described formula (1) (difference is obtained). This makes it possible to determine the short circuit precursor by cancelling the influence by the degradation, and accordingly, to improve accuracy of detecting the short circuit precursor.

In Step S9 as described above, when the amount of decrease $D_{\_mea}$ becomes larger than the amount of decrease $D_{\_est}$ by the predetermined value C or more, the determination unit 104 determines that the short circuit precursor is present between the positive electrode and the negative electrode of the battery cell 21 in Step S10. In other words, the predicted value $R_{SE\_est}$ is compared with the measurement value $R_{SE\_mea}$ of the electrolyte resistance actually measured during charging. When the measurement value $R_{SE\_mea}$ is smaller than the predicted value $R_{SE\_est}$ by the predetermined value C or more, it is determined that the short circuit precursor is present.

Subsequently, the determination unit 104 outputs the signal that contains information on presence of the short circuit precursor to the current control unit 105 and the pressure control unit 106 in Step S11. The current control unit 105 and the pressure control unit 106 execute processing for suppressing occurrence of short circuit in the battery cell 21.

In this case, upon reception of the signal from the determination unit 104, the current control unit 105 avoids an increase in the charging current to the battery cell 21, decreases the charging current, or discharges the battery cell 21. Alternatively, it is possible to combine the above-described processing to be executed. As this allows the dendrite growth to be suppressed, it is possible to suppress occurrence of short circuit in the battery cell 21.

In an example of using the combined processing, the control is executed to avoid an increase in the charging current (kept constant) in the short circuit precursor detection this time. When it is determined again that the short circuit precursor is present in the next short circuit precursor detection, the control is executed to decrease the charging current. When it is further determined that the short circuit precursor is still present in the short circuit precursor detection after next, the battery cell 21 can be discharged. Upon decrease in the charging current, it is preferable to set the charging current to the minimum value of current permissible by the vehicle control system.

Although not specifically limited, the pressure control unit 106 may execute processing for suppressing occurrence of short circuit to allow decrease in the pressure applied to the battery cell 21. As this allows the dendrite growth to be suppressed, it is possible to suppress occurrence of short circuit in the battery cell 21.

In Step S9, when it is determined that the amount of decrease $D_{mea}$ is not larger than the amount of decrease $D_{est}$ by the predetermined value C or more, the short circuit precursor detection ends.

According to the above-described short circuit precursor detection system and the short circuit precursor detection method, the use of the electrolyte resistance allows detection of the short circuit precursor without being influenced by the change in the electrode reaction resistance and the like. As detection of the precursor leading to short circuit is allowed in the stage before dendrite growth and occurrence of short circuit, it is possible to allow early detection of occurrence of short circuit.

Description of Reference Numerals

1      short circuit precursor detection system
10     controller
11     voltage sensor
12     current sensor
13     temperature sensor
14     DC-DC converter
16     pressure application mechanism
17     pressure sensor
2      battery module
21     battery cell

**Claims**

1.  A short circuit precursor detection system comprising:

    a battery including a positive electrode, a negative electrode containing lithium, and a solid-state electrolyte;
    temperature measurement means that measures a battery temperature as a temperature of the battery;
    resistance measurement means that measures an electrolyte resistance of the solid-state electrolyte; and
    short circuit precursor determination means that determines presence or absence of a precursor of short circuit that occurs between the positive electrode and the negative electrode, wherein the short circuit precursor determination means determines that the precursor is present when an amount of decrease of the electrolyte resistance measured by the resistance measurement means during charging is larger than an amount of decrease of the electrolyte resistance caused by a change in the battery temperature by a predetermined value or more.

2.  The short circuit precursor detection system according to claim 1, wherein
    the short circuit precursor determination means includes:

    a storage unit that stores a pre-charging battery temperature as the battery temperature measured by the temperature measurement means before charging, and a pre-charging electrolyte resistance as the electrolyte resistance measured by the resistance measurement means before charging;
    a prediction unit that calculates a predicted value of the electrolyte resistance in accordance with the battery temperature during charging based on the pre-charging battery temperature and the pre-charging electrolyte resistance; and
    a determination unit that compares the predicted value with a measurement value of the electrolyte resistance measured by the resistance measurement means during charging, and determines that the precursor is present when the measurement value is smaller than the predicted value by a predetermined value or more.

3.  The short circuit precursor detection system according to claim 1, wherein
    the resistance measurement means calculates the electrolyte resistance based on impedance of the battery with respect to an AC signal at frequency of 10 kHz or higher.

4.  The short circuit precursor detection system according to claim 1, wherein
    when the short circuit precursor determination means has determined that the precursor is present, a charging-discharging means that charges and discharges the battery avoids an increase in a charging current to the battery, decreases the charging current, or discharges the battery.

5.  The short circuit precursor detection system according to any one of claims 1 to 4, wherein

    the short circuit precursor detection system further includes:

a pressure application means that applies pressure to the battery; and
a pressure measurement means that measures the pressure applied to the battery, wherein

the short circuit precursor determination means executes a determination of presence or absence of the precursor when the pressure measured by the pressure measurement means is equal to or more than a predetermined value.

6. The short circuit precursor detection system according to claim 5, wherein
the pressure application means decreases the pressure applied to the battery when the short circuit precursor determination means has determined that the precursor is present.

7. A short circuit precursor detection method for determining presence or absence of a precursor of occurrence of short circuit between a positive electrode and a negative electrode of a battery including the positive electrode, the negative electrode containing lithium, and a solid-state electrolyte, comprising:

measuring a battery temperature as a temperature of the battery,
measuring an electrolyte resistance of the solid-state electrolyte; and
determining that the precursor is present when an amount of decrease of the electrolyte resistance during charging is larger than an amount of decrease of the electrolyte resistance caused by a temperature change of the battery by a predetermined value or more.

Fig. 1

Fig. 2

(a)

(b)

Fig. 3

Fig 4.

Fig. 5

Fig. 6

```
                        ┌──────────┐
                        │  Start   │
                        └────┬─────┘
                             │
        ┌────────────────────┴────────────────────┐
  S1    │   Calculate electrolyte resistance       │
        │          based on impedance              │
        └────────────────────┬────────────────────┘
                             │
  S2              ◇ On charge? ◇──────── Y ────────────┐
                        │ N                            │
```

**S1** — Calculate electrolyte resistance based on impedance

**S2** — On charge? — N / Y

**S3** — Surface pressure of battery ≥ Predetermined value? — Y / N

**S4** — Store current electrolyte resistance $R_{SE}$ as pre-charging electrolyte resistance $R_{SE\_ini}$, store current battery temperature $T_{cell}$ as pre-charging battery temperature $T_{cell\_ini}$

**S5** — Charging request? — Y / N

**S6** — Start charging

**S7** — Surface pressure of battery ≥ Predetermined value? — N / Y

**S8** — Calculate current resistance coefficient $K_{T\_now}$ based on current battery temperature $T_{cell}$, calculate pre-charging resistance coefficient $K_{T\_ini}$ based on pre-charging battery temperature $T_{cell\text{-}ini}$, calculate predicted value of electrolyte resistance

$$R_{SE\_est} = R_{SE\_ini} \times (K_{T\_now} / K_{T\_ini})$$

**S9** — $R_{SE\_est} \geqq R_{SE\_mea} + C$ ? — N / Y

**S10** — Determine that short circuit precursor is present

**S11** — Execute short circuit suppressing process

End

Fig. 7

Fig. 8

(a)

$R_{SE\_est}$   $D_{\_est}$

$R_{SE\_ini}$

ELECTROLYTE RESISTANCE $R_{SE}$

$D_{\_mea}$

$R_{SE\_mea}$

$D_{\_mea} - D_{\_est} \geqq C$

START CHARGING

TIME

(b)

BATTERY TEMPERATURE $T_{CELL}$

$T_{CELL\_now}$

$T_{CELL\_ini}$

START CHARGING

TIME

## INTERNATIONAL SEARCH REPORT

| International application No. |
| --- |
| **PCT/JP2023/007824** |

**A. CLASSIFICATION OF SUBJECT MATTER**

*H02J 7/00*(2006.01)i; *H01M 10/48*(2006.01)i
FI: H02J7/00 Y; H01M10/48 301

According to International Patent Classification (IPC) or to both national classification and IPC

**B. FIELDS SEARCHED**

Minimum documentation searched (classification system followed by classification symbols)

H02J7/00; H01M10/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2022-41144 A (GS YUASA INTERNATIONAL LTD.) 11 March 2022 (2022-03-11) entire text, all drawings | 1-7 |
| A | JP 2019-160427 A (HITACHI CHEMICAL COMPANY, LTD.) 19 September 2019 (2019-09-19) entire text, all drawings | 1-7 |
| A | JP 2021-77569 A (NISSAN MOTOR CO., LTD.) 20 May 2021 (2021-05-20) entire text, all drawings | 1-7 |
| A | JP 2019-212484 A (TOYOTA JIDOSHA KABUSHIKI KAISHA) 12 December 2019 (2019-12-12) entire text, all drawings | 1-7 |
| A | JP 2019-510351 A (LG CHEM, LTD.) 11 April 2019 (2019-04-11) entire text, all drawings | 1-7 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 May 2023** | **23 May 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**EP 4 708 611 A1**

<table>
<tr><td colspan="2" rowspan="2">INTERNATIONAL SEARCH REPORT<br>Information on patent family members</td><td colspan="2">International application No.<br><br>**PCT/JP2023/007824**</td></tr>
<tr></tr>
<tr><td>Patent document<br>cited in search report</td><td>Publication date<br>(day/month/year)</td><td>Patent family member(s)</td><td>Publication date<br>(day/month/year)</td></tr>
<tr><td>JP 2022-41144 A</td><td>11 March 2022</td><td>(Family: none)</td><td></td></tr>
<tr><td>JP 2019-160427 A</td><td>19 September 2019</td><td>(Family: none)</td><td></td></tr>
<tr><td>JP 2021-77569 A</td><td>20 May 2021</td><td>(Family: none)</td><td></td></tr>
<tr><td>JP 2019-212484 A</td><td>12 December 2019</td><td>(Family: none)</td><td></td></tr>
<tr><td>JP 2019-510351 A</td><td>11 April 2019</td><td>US 2019/0190092 A1<br>entire text, all drawings<br>WO 2018/128283 A1<br>EP 3442073 A1<br>KR 10-2018-0079924 A<br>CN 108886179 A<br>CN 208336422 U</td><td></td></tr>
</table>

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012212513 A